# EUROPÄISCHE PATENTSCHRIFT

(11) **EP 2 229 313 B1**
(45) Veröffentlichungstag und Bekanntmachung des Hinweises auf die Patenterteilung: **18.04.2012**
(21) Anmeldenummer: 09700379.2
(22) Anmeldetag: 08.01.2009
(51) Int. Cl.: B63B 35/44

(54) **SCHWIMMENDES GRÜNDUNGSTRAGWERK MIT AUFTRIEBSKOMPONENTEN, IN AUFGELÖSTER BAUWEISE**
FLOATING FOUNDATION SUPPORTING FRAMEWORK WITH BUOYANCY COMPONENTS, HAVING AN OPEN-RELIEF DESIGN
CHARPENTE POUR FONDATION FLOTTANTE À COMPOSANTS DE FLOTTAISON, DE TYPE DE CONSTRUCTION DISPERSÉE

(30) Priorität: 09.01.2008 DE 102008003647
(43) Veröffentlichungstag der Anmeldung: 22.09.2010
(73) Patentinhaber: GICON windpower IP GmbH, 01219 Dresden (DE)
(72) Erfinder: Jähnig, Jens, 01738 Dorfhain (DE); Dahlhaus, Frank, 76351 Linkenheim-Hohenstetten (DE)
(74) Vertreter: Kailuweit & Uhlemann Patentanwälte
(86) Internationale Anmeldenummer: PCT/EP2009/050186
(87) Internationale Veröffentlichungsnummer: WO 2009/087200

(56) Entgegenhaltungen:
- EP-A1- 1 876 093
- WO-A2-2004/055272
- WO-A2-2006/038091
- GB-A- 2 378 679
- NL-C2- 1 008 318
- US-A- 5 435 262

## Beschreibung

Die Erfindung betrifft ein schwimmendes Gründungstragwerk für Offshore-Bauwerke zur Positionierung von Funktionseinheiten in Schwimmlage. Solche schwimmenden Gründungstragwerke können Windkraftanlagen, Leuchttürme, Sende- und/oder Empfangsanlagen, Radaranlagen, Brücken, Hafenmolen, Landebahnen oder ähnliches, aufnehmen und in Küstennähe oder auch in größerer Entfernung vor der Küste tragen.

Schwimmende Fundamente sind beispielsweise für Leuchttürme oder auch für Windkraftanlagen bekannt. Dazu wird auf die DE 10 2005 036 679.1 verwiesen, die sich mit der Verankerung von schwimmfähigen Fundamenten am Meeresgrund befasst.

Großanlagen, wie Windkraftanlagen mittlerer und hoher Leistung haben häufig ein erhebliches Gewicht, das durch entsprechende Schwimmkörper kompensiert werden muss. Diese müssen Auftriebskräfte erzeugen, die das Gewicht der zu tragenden Anlage sowie des schwimmenden Fundaments bei Weitem übersteigen, um das betreffende Bauwerk ungeachtet von Wellenbewegung und Windeinfluss ruhig zu halten. Die nötigen Auftriebskräfte können sich dazu auf mehrere tausend Tonnen summieren.

Schwimmfundamente müssen von Haus aus häufig eine relativ große Fläche überspannen. Die punktuell von Auftriebskörpern aufgebrachte Auftriebskraft muss von dem Bauwerk sicher aufgenommen und ertragen werden.

Über die Ansprüche hinsichtlich der Belastbarkeit des Fundaments hinaus stellen sich in der Praxis auch Ansprüche hinsichtlich der Fertigungsmöglichkeiten und Kosten an eine entsprechende Bauwerkskonstruktion. Z.B. soll der logistische Aufwand wie auch der Konstruktionsaufwand, der Materialaufwand und letztlich auch der Wartungsaufwand in Grenzen gehalten werden. Bisherige Schwimmfundamentkonstruktionen haben auf mindestens einem der genannten Gebiete Defizite.

Aus der GB 2 378 679 A ist ein Gründungstragwerk für eine Windkraftanlage bekannt, die einen zentralen zylinderartigen vertikalen Rumpf aufweist. Von diesem erstrecken sich Radialarme zu Schwimmkörpern. Die Radialarme sind als flächige Stabwerke ausgebildet.

Davon ausgehend ist es Aufgabe der Erfindung, ein schwimmendes Gründungstragwerk zu schaffen, das hinsichtlich mindestens einer der genannten Gebiete gegenüber bekannten Bauwerken verbessert ist.

Diese Aufgabe wird mit dem schwimmenden Gründungstragwerk nach Anspruch 1 gelöst:

Das erfindungsgemäße Gründungstragwerk besteht aus Auftriebskörpern, von denen wenigstens einer wenigstens teilweise aus Beton besteht, sowie aus Verbindungselementen, die aus Stahl bestehen und ein Tragwerk bilden. Die Erstellung der Auftriebskörper wenigstens teilweise aus Beton kann den Fertigungsaufwand erheblich senken. Dies gilt insbesondere für geometrisch komplizierte Formen, wie beispielsweise Knotenbereiche, die hohl ausgebildet sein müssen, um eine Begehbarkeit des Bauwerks zu ermöglichen. Es gilt auch für Auftriebskörper, die an äußeren Enden eines beispielsweise sternförmigen Tragwerks angeordnet sind, um dort Auftriebskräfte in das Tragwerk einzuleiten. Aus Beton können insbesondere Unterteile oder Böden von Auftriebskörpern gefertigt werden. Aufgrund der Steifheit von Stahlbetonelementen können diese beispielsweise einen ebenen oder nur schwach gewölbten Boden aufweisen.

Der Einsatz von Beton zur Erstellung eines schwimmenden Gründungstragwerks minimiert den Stahleinsatz und verringert somit Korrosionsprobleme und Gestehungskosten.

Das schwimmende Gründungstragwerk weist vorzugsweise mehrere in Gebrauch waagerecht orientierte Ausleger sowie Verbindungsknoten auf, von denen geneigte und waagerechte Rohrsegmente abgehen. Das Tragwerk besteht aus einem Last abtragenden Raumfachwerk, vorzugsweise in Gestalt vorgefertigter Stahlkonstruktionen, und z.B. in Knotenbereichen angeordneten, Auftrieb erzeugenden Hohlkörpern. Diese sind vorzugsweise in Form von Stahlbetonfertigteilen gebildet und bestehen bspw. aus wasserundurchlässigem Beton. Die Knotenbereiche sind vorzugsweise durchgängig hohl ausgebildet, um die Begehbarkeit der Auslegerbereiche sicherzustellen. Das Tragwerk ist vorzugsweise so ausgebildet, dass die Auftriebskräfte und der Lastabtrag in den Verbindungsknoten der Rohrsegmente, im gesamten Auslegerbereich und im Anschlussbereich der vorzugsweise weit außen angeordneten Auftriebskörper entkoppelt und jeweils spezifischen Tragwerkselementen zugeordnet ist. Dadurch werden eindeutige Belastungsverhältnisse geschaffen und ungewollte Doppel- oder Überlastungen vermieden.

Das erfindungsgemäße Tragwerk ist in Mischbauweise unter Einsatz von Stahl und Beton, vorzugsweise wasserundurchlässigem Beton, errichtet. Es wird teilweise durch ein Schalentragwerk und teilweise durch ein Stabtragwerk gebildet. Zu dem Schalentragwerk gehören beispielsweise aus Stahl bestehende Rohrsegmente oder auch Stahl oder Stahlbetonfertigteile, die beispielsweise Verbindungsknoten bilden. Zu dem Stabtragwerk gehören Fachwerkabschnitte, beispielsweise aus Stahlrohr oder anderweitigem Stahlprofil. Das Stabtragwerk ist mit dem Schalentragwerk verbunden, so dass das Schalentragwerk und das Stabtragwerk gemeinsam das Gründungstragwerk bilden.

Das Gesamttragverhalten wird in den Knoten des Tragwerks und in den Auslegern durch die Fachwerkskonstruktion bestimmt. Die lokale Lasteinleitung der Auftriebskräfte erfolgt in den Knoten und an den Auslegern durch Stahlbetonfertigteile oder im Auslegerbereich auch durch Rohrsegmente.

Die außen liegenden Auftriebskörper sind vorzugsweise aufrecht stehende Zylinder, deren untere Tasse als Kreiszylinderschale gebildet ist. Auf diese ist eine Schalenkonstruktion aus Stahl aufgesetzt, die vorzugsweise als vorgefertigte, unten offene becherförmige Kreiszylinderschale hergestellt wird.

In den Verbindungsknoten sind die Stahlbetonfertigteile mit der Stahlkonstruktion verbunden. Hierzu werden vorzugsweise wasserundurchlässige korrosionssichere Verbindungstechnologien eingesetzt. Stahlrohre oder Stahlmuffen können mit Betonhohlkörpern über Elastomerelemente oder dergleichen verbunden werden.

Die Ausbildung des Tragwerks in gemischter Bauweise bestehend aus Schalentragwerken und Stabtragwerken ermöglicht einen hohen Grad an Variabilität bzgl. der Anforderungen an die Trägheitsmassenverteilung in dem Gesamtsystem. Es ist eine Anpassung an Systemanforderungen von Windenergieanlagen für sechs Megawatt und darüber hinaus möglich. Außerdem können die Baugruppen des Systems, wie beispielsweise Teile des Fachwerks und Teile des Schalentragwerks vorgefertigt werden. Die Anlage kann im Trockendock oder auch vor Ort errichtet werden. Z.B. können zusammensetzbare Systembaugruppen im Trockendock der Endmontage zuführt werden, wonach das Gründungstragwerk an den Einbauort geschleppt wird. Durch die Vorfertigung von Modulen muss im Trockendock lediglich die Endmontage durchgeführt werden. Das minimiert die erforderliche Belegungszeit des Trockendocks und ermöglicht so die effiziente Erstellung einer größeren Anzahl von Schwimmtragwerken.

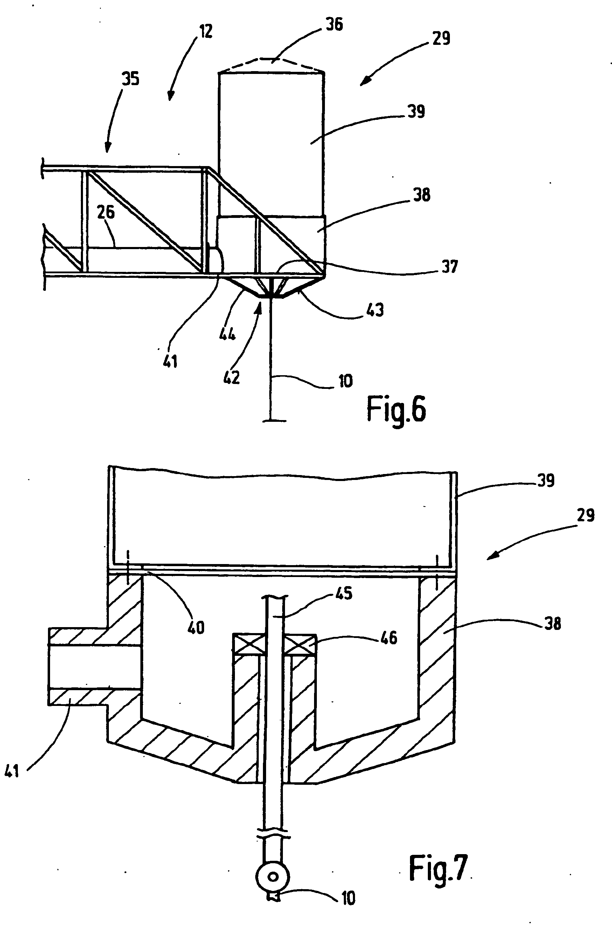

Die Lasteinleitung der unteren Abspannung erfolgt vorzugsweise in die Fachwerkkonstruktion. Dies vorzugsweise an den Enden der Ausleger ohne Beanspruchung der Auftriebskörper. Das Tragwerk nimmt somit sowohl die Kräfte der Abspannung als auch die Kräfte der Auftriebskörper auf. Es ist aber auch möglich, sowohl die Zugkräfte der Abspannung als auch die Gewichtskraft des Bauwerks jeweils als Druckkraft (vollständig) in die Betontassen einzuleiten (siehe Fig. 7).

Mit dem vorgestellten Gründungstragwerk können Bauwerke unabhängig von der Wassertiefe kostenneutral für Tiefen bis tausend Meter errichtet werden.

Das erfindungsgemäße System gestattet eine optionale Anpassung der Systemmassenverteilung über variabel gestaltete Ballastelemente, vorzugsweise durch Anordnung von zusätzlichen Massen in Form von Stahlbetonfertigteilen. Diese können bedarfsweise an beliebigen Stellen im gesamten Bereich der Fachwerkskonstruktion der Ausleger angebracht werden. Solche Massen können auch zur Erhöhung der Massenträgheit, zur Vermeidung von Schwingungen, zur Schwingungsberuhigung, Schwingungsreduktion und dergleichen, dienen.

Die Gesamtauftriebskraft kann optional durch zusätzliche Anordnung variabel gestalteter Auftriebskomponenten, vorzugsweise in Form kugelförmiger Hohlkörper im gesamten Bereich der Fachwerkskonstruktion der Ausleger an verschiedene Erfordernisse angepasst werden.

Weitere Einzelheiten vorteilhafter Ausführungsformen der Erfindung sind Gegenstand der Zeichnung, der Beschreibung oder von Ansprüchen. Die Beschreibung beschränkt sich auf wesentliche Aspekte der Erfindung und sonstiger Gegebenheiten. Die Zeichnung offenbart weitere Details und ist ergänzend heranzuziehen. Es zeigen:
Figur 1 eine isometrische Ansicht einer Ausführungsform eines Schwimmfundaments in Prinzipdarstellung am Beispiel einer Windkraftanlage,
Figur 2 einen Verbindungsknoten des Gründungstragwerks in gesonderter Darstellung,
Figur 3 einen Ausleger des Gründungstragwerks in ausschnittsweiser Seitenansicht,
Figur 4 eine Verbindungsstelle zwischen einem Betonelement und einem Stahlelement an einem Knoten, in ausschnittsweiser Schnittdarstellung,
Figur 5 eine alternative Ausführungsform einer Verbindungsstelle zwischen einem Betonelement und einem Stahlelement an einem Knoten, in ausschnittsweiser Schnittdarstellung,
Figur 6 ein Ende des Auslegers mit Schwimmkörper in schematisierter Seitenansicht,
Figur 7 den Schwimmkörper nach Figur 6 in teilweise geschnittener Darstellung,
Figur 8 eine abgewandelte Ausführungsform des Schwimmkörpers in geschnittener Prinzipdarstellung,
Figur 9 eine bevorzugte Ausführungsform des Schwimmkörpers mit unterflurigem Maschinenraum in geschnittener Prinzipdarstellung,
Figur 10 den Maschinenraum nach Figur 9 in quer geschnittener Prinzipdarstellung,
Figur 11 und 12 verschiedene Grundrisse des Gründungstragwerks in Draufsicht und Prinzipdarstellung.

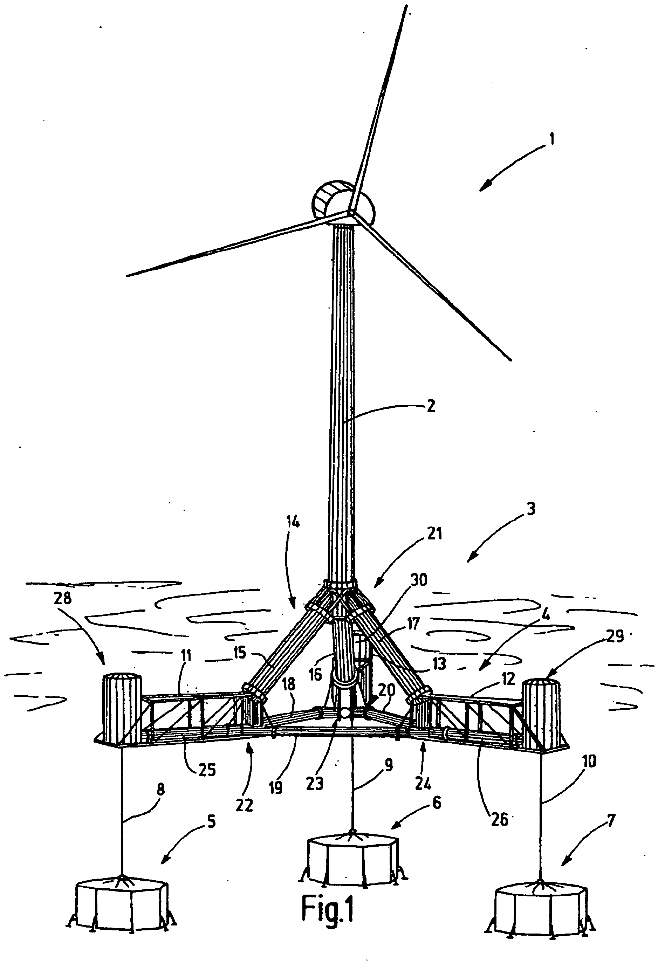

In Figur 1 ist eine Windkraftanlage 1 veranschaulicht, die im Meer errichtet ist und deren Mast 2 auf einem Schwimmfundament 3 ruht. Zu dem Schwimmfundament 3 gehört ein schwimmendes Gründungstragwerk 4, das an Ballastkörpern 5, 6, 7 gehalten ist. Diese ruhen auf dem Meeresgrund und bestehen aus Beton. Sie sind mit dem Gründungstragwerk 4 über Seile 8, 9, 10 verbunden, die aus korrosionsfestem oder korrosionsgeschützten Stahl bestehen. Das Gewicht der Ballastkörper 5, 6, 7 ist so hoch, dass es die über die Seile 8, 9, 10 von dem Gründungstragwerk 4 ausgehenden Kräfte bei weitem überwiegt.

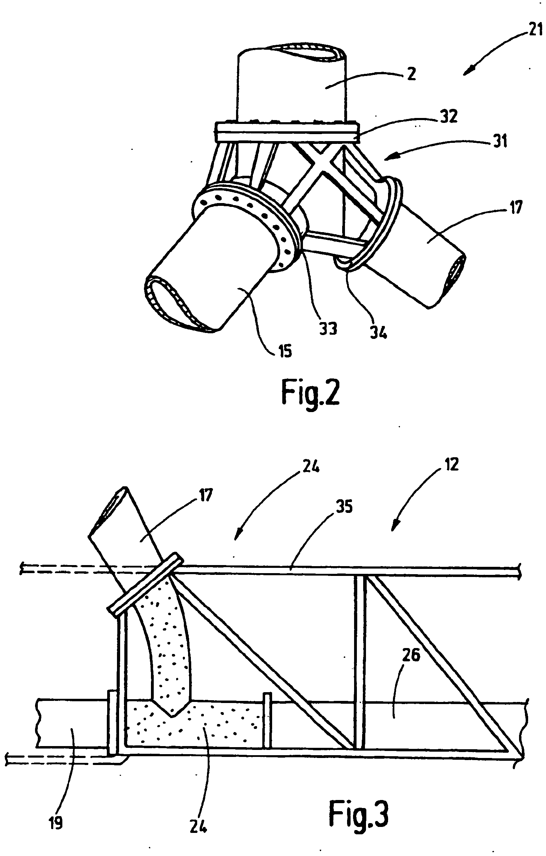

Das Gründungstragwerk 4 ist in gemischter Stahl- und Betonbauweise errichtet. Es weist mehrere Ausleger 11, 12, 13 auf, die von einem mittleren Raumtragwerk 14, beispielsweise in Tetraederform, radial nach außen weg ragen. Das Gründungstragwerk 4 ist in mehrerlei Hinsicht in gemischter Bauweise errichtet. Zum Teil ist es als Schalentragwerk ausgebildet und zum Teil ist es als Stabtragwerk ausgebildet. Außerdem enthält es Stahlelemente sowie Betonelemente. Das Raumtragwerk 14 umfasst Rohrsegmente 15, 16, 17, 18, 19, 20, die die Kanten eines Tetraeders bilden und an Knotenstücken 21, 22, 23, 24 miteinander verbunden sind. Der relativ große Durchmesser der Rohrsegmente 15 bis 20 führt dazu, dass jedes Rohr als Schalentragwerk betrachtet werden kann. Die Knotenstücke 21 bis 24 sind hohl ausgebildet und führen zu weiteren Rohrsegmenten 25, 26, die sich vorzugsweise etwa horizontal und radial von dem Zentrum des Gründungstragwerks 4 weg nach außen zu Auftriebskörpern 28, 29, 30 erstrecken. Die Knotenstücke 21 bis 24 bestehen vorzugsweise aus Stahlbeton, können aber auch aus Stahlrohr ausgebildet sein. Dies gilt insbesondere für das Knotenstück 21. Sie sind durch seewasserfeste, korrosionssichere und dichte Verbindungen an die jeweils benachbarten Rohrsegmenten 15 bis 20 sowie 25, 26 angeschlossen. Die Knotenstücke 21 bis 24 sind weitgehend lastfrei. Sie tragen jedoch mit ihrem Auftrag zum Gesamtauftrieb des Bauwerks bei. Sie sind von einem käfigartigen Stabwerk umgeben. Dies ist aus Figur 1 und am Beispiel des Knotenstücks 21 insbesondere auch aus Figur 2 zu erkennen. Ein solcher Käfig 31 bildet ein räumliches Stabwerk, das ringförmige lastverteilende Hohlkastenträger 32, 33, 34 miteinander verbindet, an die entsprechende Rohrsegmente 15, 17 oder auch der Mast 2 angeschlossen werden können. Der ringförmige Hohlkastenträger 32, 33 kann sowohl im Querschnitt wie auch im Grundriss rund oder rechteckig ausgebildet sein. Durch seine Rechteckform ist der Anschluss des Raumtragwerks der Ausleger technologisch einfach und statisch günstiger. Die den Käfig 31 bildenden Stäbe können Vollprofile, Rohrprofile, L-Profile, T-Profile oder sonstige geeignete Profile sein. Der Käfig 31 ist vorzugsweise eine Schweißkonstruktion.

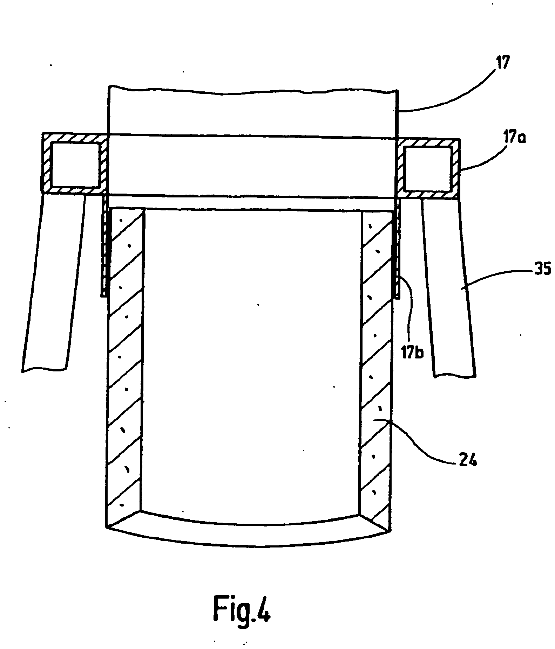

Figur 4 zeigt einen Hohlkastenträger am Beispiel des Knotens 24. An dem (rechteck-)ringförmigen Kastenprofil 17a, das an das Rohrsegment 17 anschließt, schließt das Stabwerk 35 an. Außerdem kann an das (rechteck-)ringförmige Kastenprofil 17a eine Muffe 17b angeschlossen sein, in die das Knotenstück 24 abgedichtet eingesetzt ist.

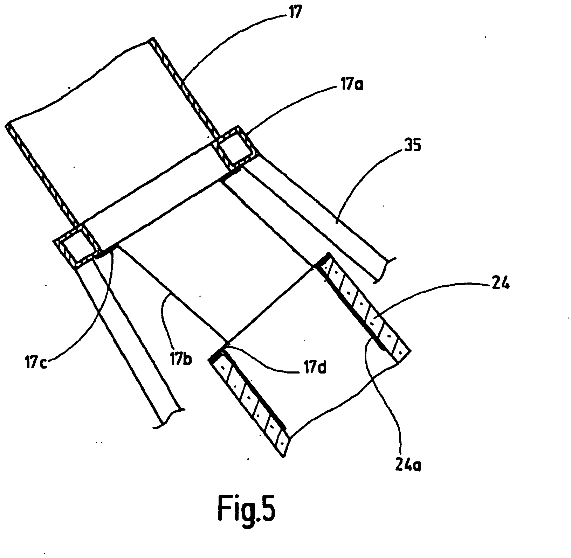

Eine abgewandelte Ausführungsform der Verbindung zeigt Figur 5 ebenfalls am Beispiel des Knotenstücks 24. Zwischen dem Kastenprofil 17a und dem Knotenstück 24 ist ein kurzes Metallrohrstück 17b vorgesehen. Dieses kann einseitig oder beidseitig über biegeweiche Flansche 17c an das Kastenprofil 17a und das Knotenstück 24 angeschlossen sein. Das Knotenstück 24 weist beispielsweise innen eine aus Blech, z.B. Stahlblech, bestehende verlorene Schalung 24a auf, die den Betonkörper des Knotenstücks 24 auskleidet. Die Schalung 24 kann sich bis auf die Stirnseite des Knotenstücks 24 erstrecken und dort mit dem Flansch 17d oder direkt mit der Muffe 17b verschweißt oder sonst wie verbunden sein.

Die Ausleger 11, 12, 13 sind vorzugsweise jeweils als räumliches Stabtragwerk ausgebildet. Dies geht aus Figur 1 und am Beispiel des Auslegers 12 auch aus Figur 3 hervor. Wie ersichtlich kann das Stabwerk 35 des Auslegers 12 das Knotenstück 24 umschließen und entlasten. Das Stabwerk 35 bildet somit den Käfig zur Einfassung des Knotenstücks 24, das aus Stahlbeton besteht. Es sind wiederum Hohlkastenträger oder sonstige Flansche zum Anschluss der Rohrstücke 17, 19, 26 vorgesehen. Die Abdichtung zwischen dem Knotenstück 24 und den Rohrsegmenten 17, 19, 26 erfolgt wiederum wasserdicht und korrosionsfest, z.B. über Elastomerelemente, Pressdichtungen oder dergleichen. Die auftretenden Lasten, insbesondere Biegetorsionslasten und dergleichen werden von dem Stabwerk 35 aufgenommen und von diesem auf die tragenden Rohrsegmente 17, 19 übertragen. Das Rohrsegment 26 liegt im vorliegenden Ausführungsbeispiel nicht tragend in dem von dem Stabwerk 35 gebildeten Käfig. Es kann bedarfsweise auch als Betonrohr, Kunststoffrohr oder dergleichen ausgebildet sein. Das Stabwerk 35 bildet vorzugsweise ein Raumtragwerk mit Rechteckquerschnitt. Es kann, anders als in Figur 1 dargestellt, sich auch durch den Innenraum des Raumtragwerks 14 fortsetzen.

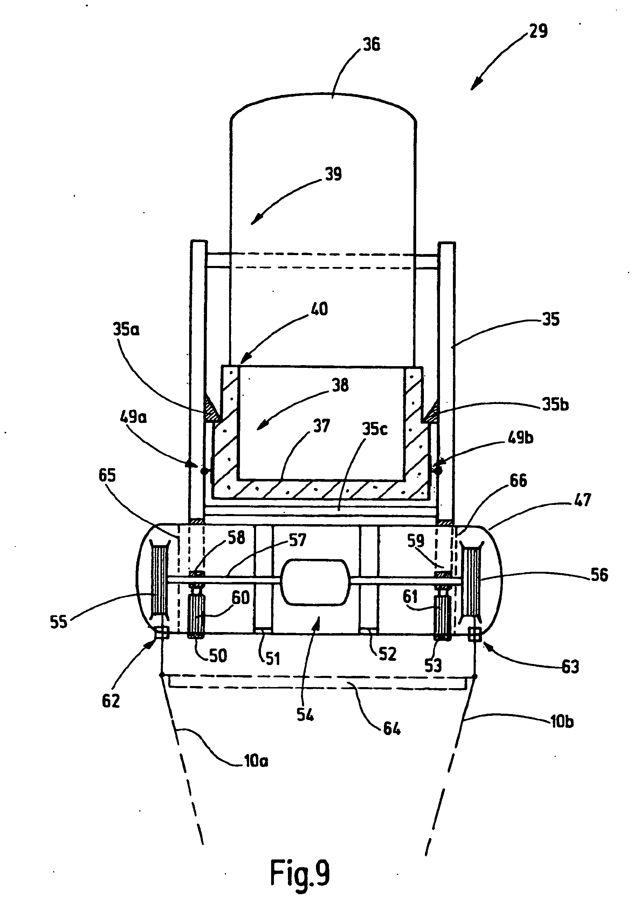

Figur 6 und 9 veranschaulicht den Anschluss des Auftriebskörpers 29 an den Ausleger 12 stellvertretend für alle anderen radial außen liegenden Auftriebskörper 28, 30. Wie ersichtlich, bildet der Auftriebskörper 29 einen vertikal aufrecht stehenden Zylinder mit gewölbter oder gerundeter Oberseite 36 und im Wesentlichen flachen Boden 37. Er ist vorzugsweise zweiteilig ausgebildet. Sein unterer Teil 38 wird vorzugsweise durch einen tassenförmigen Zylinderabschnitt aus Stahlbeton gebildet, wie es aus der Schnittdarstellung gemäß Figur 7 oder 9 hervorgeht. Dieser kann einen ebenen, oder wie dargestellt auch schwach kegelförmigen oder sonst wie gewölbten Boden aufweisen. Zu dem Auftriebskörper 29 gehört außerdem ein oberer Teil 39, der z.B. als Stahlkonstruktion ausgebildet sein kann. Wie Figur 5 zeigt, sind der obere Teil 39 und der untere Teil 38 abgedichtet miteinander verbunden. Sie stoßen beispielsweise an einer Dichtung 40 aneinander, die auf der oberen kreisringförmigen ebenen Dichtungsfläche des unteren Teils 38 liegt. Zur Verbindung kann eine Verschraubung dienen. Bevorzugterweise ist das Teil 38 jedoch innen mit einer verlorenen Schalung z.B. aus Stahl versehen, die sich flanschförmig über die obere Stirnseite des Teils 38 erstrecken kann. Diese Schalung kann mit dem Teil 39 verschweißt werden. Die Dichtung 40 ist dann überflüssig.

Der Auftriebskörper 29 ist hohl und kann begehbar ausgebildet sein. Das Rohrsegment 26 kann über einen entsprechenden Stutzen 41 an den Betonkörper 38 angeschlossen sein. In oder an dem Stutzen 41 und/oder in oder an dem Rohrsegment 26 können Wände, Schotten oder dergleichen vorgesehen sein, die sich bedarfsweise absperren lassen.

Der Auftriebskörper 29 ist über Verbindungsmittel an dem Ausleger 12 verankert. Vorzugsweise sind diese Mittel an dem oberen Bereich des Teils 38 angeordnet, um die nach oben gerichtete, auf den Teil 38 einwirkende Auftriebskraft als Druckkraft auf den Ausleger 12 zu übertragen. Zu den Befestigungsmitteln können an dem Betonkörper ausgebildete Stufen, dort eingelassene Anker, Stahlplatten und dergl. sein, die mit dem Ausleger 12 verbunden sind. Vorzugsweise sind die Stufen, wie Figur 9 zeigt, nach oben orientiert und stützen sich an Konsolen 35a, 35b des Stabwerks 35 nach oben ab. Unter dem Teil 38 kann das Stabwerk 35 einen oder mehrere Träger 35c aufweisen, auf denen bei der Montage im Trockendock die Betontasse 38 temporär abgesetzt werden kann. Seitenabstützungen 49a, b übertragen Seitenkräfte von dem Stabwerk 35 auf den Auftriebskörper 29 und umgekehrt.

Der Ausleger 12 weist außerdem eine Anschlusseinrichtung 42 für das Seil 10 auf. Die Anschlusseinrichtung 42 leitet die Zugkraft des Seils 10 in den Ausleger 12 ein. Dazu sind einzelne Streben 43, 44 vorgesehen, die nach unten von dem Ausleger 12 abgehen und diesen mit dem Seil 10 verbinden.

Es ist auch möglich, in dem Innenraum des Auftriebskörpers 29, wie in Figur 7 angedeutet, eine z.B. hydraulisch betätigte Niveauausgleichseinrichtung anzuordnen, die eine Stange 45 vertikal verstellbar hält. Während ein entsprechender, z.B. hydraulischer Verstellapparat im Innenraum des Auftriebskörpers 29 angeordnet ist und an einem Ende der Stange 45 angreift, kann deren anderes Ende mit dem Seil 10 verbunden sein. An dem Boden des Teils 38 kann eine entsprechende Durchführung vorgesehen sein, die die Stange 45 durchgehen lässt und diese dauerhaft gegen die Durchführung abdichtet. Mit der hydraulischen Stelleinrichtung ist eine aktive Nivellierung des Schwimmfundaments 3 möglich.

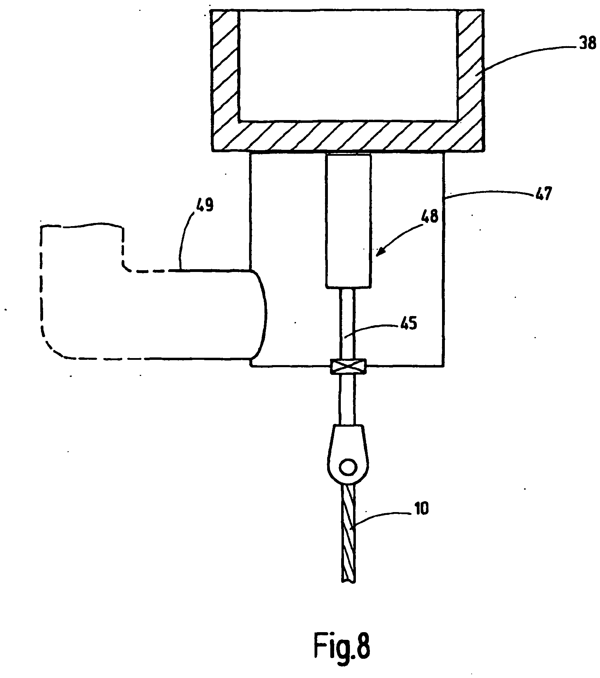

Alternativ kann die Nivelliereinrichtung auch an anderer Stelle, beispielsweise unterhalb des Teils 38 angeordnet sein, wie Figur 8 zeigt. Z.B. kann neben oder, wie dargestellt, unter dem Teil 38 an dem Ausleger 12 eine z.B. aus Stahl bestehende Kammer 47 angebracht sein, in der die hydraulische Stelleinrichtung 48 angeordnet ist. Von dieser kann die Stange 45 ausgehen, die mit dem Seil 10 verbunden ist. Die Kammer 47 kann über ein entsprechend bemessenes Rohr 49 von ein bis zwei Metern Durchmesser begehbar sein, das beispielsweise mit dem Rohrsegment 26 oder dem Stutzen 41 in Verbindung steht.

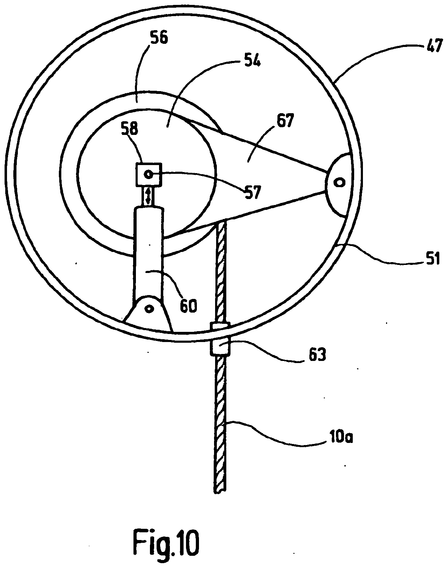

In den Figuren 9 und 10 ist eine bevorzugte Ausführungsform des Gründungstragwerks veranschaulicht. Die Kammer 47 bildet einen Maschinenraum in Form z.B. eines liegenden Zylinders mit abgerundeten Stirnseiten. Die Kammer 47 ist unterhalb des Auftriebskörpers 29 angeordnet und mit dem Stabwerk 35 verbunden. Die Wandung des Zylinders ist z.B. mit mehreren ringförmigen Kastenprofilträgern 50, 51, 52, 53 ausgesteift, die innen und/oder außen oder die Wandung durchsetzend an der Kammer 47 angeordnet sind. In der Kammer 47 ist eine Winde 54 mit mindestens einer, vorzugsweise zwei Seilscheiben 55, 56 untergebracht. Diese können auf einer gemeinsamen Welle 57 sitzen, die in zwei oder mehreren Lagerblöcken 58, 59 drehbar gelagert ist. Die Lagerblöcke 58, 59 sind vorzugsweise auf einer Vertikalstelleinrichtung, beispielsweise in Form von Hydraulikzylindern 60, 61 gelagert, die eine Höhenverstellung der Lagerblöcke 58, 59 und somit der Seilscheiben 55, 56 gestatten. Von den Seilscheiben 55, 56 laufen Seile 10a, 10b zu einem gemeinsamen Schwergewichtsfundament. Sie können auch zu unterschiedlichen Schwergewichtsfundamenten laufen. Die Seile 10a, 10b durchsetzen die Wandung der Kammer 47 bei entsprechenden Dichtungen 62, 63. Die Seile 10a, 10b können untereinander durch eine Stütze 64 verbunden sein, die die Parallelität der Seilabschnitte zwischen den Seilscheiben 55, 56 und der Stütze 64 sicherstellt.

Wie in Figur 9 lediglich durch gestrichelte Linien angedeutet, können die Seilscheiben 55, 56 von dem übrigen Innenraum der Kammer 47 durch Schottwände 65, 66 getrennt sein. Vorzugsweise ist die gesamte Kammer 47 trocken. Sollte Wasser bis zu den Seilscheiben 55, 56 vordringen, wird es durch die Schottwände 65, 66 daran gehindert, die Kammer 47 zu fluten.

Der Maschinenraum ist in Figur 10 nochmals gesondert im Querschnitt veranschaulicht. Wie ersichtlich, ist die Winde 54, die einen Elektromotor, Hydraulikmotor oder dergleichen als Antrieb enthält, an der Kammer 47 über eine Drehmomentstütze 67 abgestützt bzw. befestigt. Die Drehmomentstütze kann an der Wandung der Kammer 47 schwenkbar gelagert sein. Die Winde 54 hat eine nicht weiter veranschaulichte Einrichtung zum Bremsen und Arretieren der Welle 57 in gewünschten Drehpositionen. Die Hydraulikzylinder 60, 61 dienen dazu, die Lagerblöcke 58, 59 vertikal zu verstellen, um eine vertikale Feinjustierung des Tragwerks zum Austarieren von Kräften während des Betriebs des Bauwerks zu ermöglichen. Wie ersichtlich, können auch die Hydraulikzylinder 60, 61 wie die Drehmomentstütze 67 an der Kammer 47 schwenkbar gelagert sein.

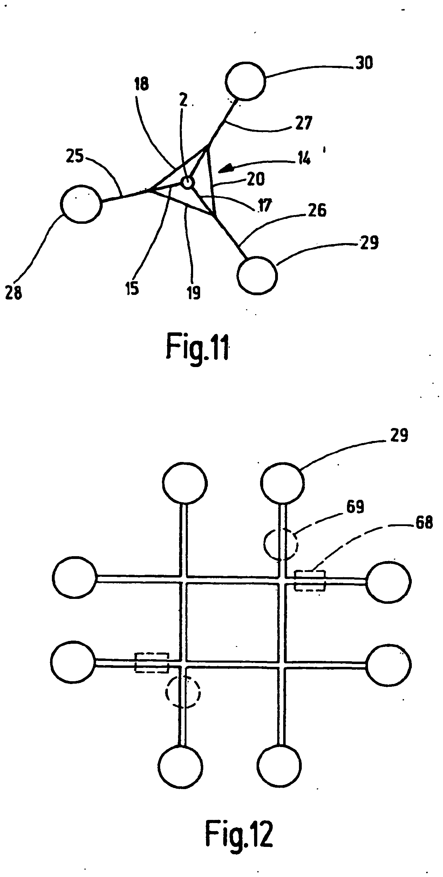

Das Gründungstragwerk ist in Figur 11 schematisch in Draufsicht dargestellt. Abweichend von dieser Dreisternform sind nahezu beliebige andere Formen des Tragwerks möglich, wie in Figur 12 veranschaulicht. Es können eine Vielzahl von Ballastkörpern 68 und/oder Auftriebskörpern 69 sowohl an der Peripherie als auch in anderen Abschnitten des Tragwerks angeordnet werden. Das Tragwerk lässt sich aus einfachen Bauteilen aufbauen, bei dem insbesondere als Knotenstücke und Auftriebskörper Betonfertigteile verwendet werden. Wie ersichtlich, kann das Gründungstragwerk pyramidenförmig ausgebildet sein und beispielsweise eine von drei Hohlzylindern gebildete geneigte Stützkonstruktion und aus drei Hohlzylindern gebildete dreieckige Tragwerksbasis aufweisen. Die Tragwerksbasis kann jedoch jede beliebige und insbesondere auch rechteckige Form aufweisen und z.B. quadratisch ausgebildet sein. Es können gemäß einer Variante der Erfindung, ausgehend von den unteren Eckpunkten der Tragwerksbasis drei Ausleger mit einem gegenseitigen Öffnungswinkel in der Grundrissprojektion von 120° vorgesehen werden. Davon abweichend kann jede beliebige Anzahl von Auslegern mit beliebigen Ausrichtungen im Grundriss eingesetzt werden. Insbesondere können die Ausleger auch rechtwinklig zueinander positioniert sein.

Die Dimensionierung des aus mehreren Auftriebskörpern bestehenden Schwimmkörpers erfolgt unabhängig von den Tragwerkskomponenten, deren Auslegung von der Auslegung der Last abhängig sind. Zur Erreichung einer geeigneten Massenverteilung kann eine Anpassung der Systemmassenverteilung über variabel gestaltbare Ballastelemente, vorzugsweise durch Anordnung von zusätzlichen Massen in Form von Stahlbetonfertigteilen, an geeigneter Stelle der Fachwerkkonstruktion des Auslegers vorgenommen werden. Der Ausleger besteht aus Stahlprofilen und ist in den Knoten an Raumfachwerke angeschlossen, welche die waagerechten und geneigten Rohrsegmente miteinander verbinden. Die Raumfachwerke können Käfige bilden, die die Knoten einschließen. Der Anschluss der Raumfachwerke an die Rohrsegmente erfolgt über einen Last verteilenden, (rund- oder rechteck-) ringförmigen Hohlkastenträger. Zur Erzielung der statisch erforderlichen Gesamtauftriebskraft können variabel gestaltbare Auftriebskomponenten, vorzugsweise in Form von kugelförmigen Hohlkörpern im gesamten Bereich der Fachwerkskonstruktion der Ausleger zusätzlich angeordnet werden.

Bevorzugt wird das komplett vorgefertigte Gründungstragwerk mit aufgesetzter Windenergieanlage in horizontaler Schwimmlage an seinen Einsatzort gebracht und dann dort mit den Verankerungselementen verbunden. Zum Absenken des Schwimmtragwerks werden die Winden 54 genutzt, die in einer gewünschten Tauchtiefe z.B. mittels Bremsen blockiert werden. Eine fortwährende Schwimmlagen-Feinjustierung kann mit den Hydraulikzylindern vorgenommen werden. Mit der Erfindung wird erreicht, den Lastabtrag durch schräge Stützen, vorzugsweise in Form von Rohrsegmenten aus Stahl und räumlichen Stahlfachwerkkonstruktionen zu erreichen, während der Auftrieb vorzugsweise von weit außen angeordneten Auftriebskörpern sichergestellt wird.

Folgende einzelne Punkte und Aspekte können im Zusammenhang mit der Erfindung Bedeutung haben. Das schwimmende Gründungstragwerk ist für Offshore-Bauwerke zur Positionierung von Funktionseinheiten in Schwimmlage auf dem oder in dem Wasser, insbesondere auf dem oder in dem Meer für Tiefen bis 1.000 m vorgesehen. Es weist mehrere durch Tragkonstruktionen, vorzugsweise vorgefertigte Stahl- und Betonkonstruktionen, untereinander verbundene Auftriebskörper und gegebenenfalls Ballastkörper auf und dient als Fundament oder als Plattform für eine Funktionseinheit. Das Gründungstragwerk ist an auf dem Meeresboden aufgesetzte Verankerungselemente in Betonbauweise mittels Zugelemente angeschlossen. Die waagerechten Ausleger tragen Auftriebskörper und bestehen, wie die Verbindungsknoten geneigter oder waagerechter Rohrsegmente aus lastabtragenden Raumfachwerken, vorzugsweise in Form vorgefertigter Stahlkonstruktionen, wobei in den Knotenbereichen auftriebserzeugende Hohlkörper in Form von Stahlbetonfertigteilen aus wasserundurchlässigem Beton angeordnet sind, die die Begehbarkeit der Auslegerbereiche sicherstellen.

Die Funktionen "Auftrieb" und "Lastabtrag" sind in den Verbindungsknoten der Rohrsegmente, im gesamten Auslegerbereich und im Anschlussbereich der weit außen angeordneten Auftriebskörper voneinander entkoppelt und jeweils spezifischen Tragwerkselementen zugeordnet. Die Konstruktion umfasst eine Mischbauweise mit Einsatz von Stahl und Hochleistungsbeton. Sie besteht vorzugsweise aus einer Kombination von Schalentragwerken aus den Werkstoffen Hochleistungsbeton bzw. Stahl, Stahlbetonfertigteilen bzw. Rohrsegmente und Stabtragwerke aus Stahl.

Das Gesamttragverhalten ist durch Fachwerkkonstruktionen in den Knoten und im Auslegerbereich und die lokale Lasteinleitung der Auftriebskräfte in den Knoten und im Auslegerbereich gekennzeichnet. Die lokale Lasteinleitung der Auftriebskräfte erfolgt in den Knoten durch Stahlbetonfertigteile. Im Auslegerbereich kann die Lasteinleitung auch durch Rohrsegmente erfolgen. Die Auftriebskörper sind in Mischbauweise als Stahlbetonfertigteile vorzugsweise als Kreiszylinderschale mit unterer Bodenplatte und aufgesetzter Schalenkonstruktion in Stahl, vorzugsweise als vorgefertigte Kreiszylinderschale hergestellt. Die Schnittstellenausbildung zwischen Betonkonstruktion und Stahlkonstruktion wird in den Verbindungsknoten und im Anschlussbereich der Auftriebskörper als wasserundurchlässige korrosionssichere Übergangskonstruktion in Stahlbauweise ausgebildet. Es wird ein hoher Grad an Variabilität bzgl. der Anforderungen an die Trägheitsmassenverteilung für das Gesamtsystem erreicht. Es ist eine Anpassung an Systemanforderungen von Windenergieanlagen bis 6 Megawatt möglich. Es wird ein hoher Vorfertigungsgrad durch den Einsatz von Systembaugruppen erzielt. Modular zusammensetzbare Systembaugruppen sind in Semifertig-Fertigungszustand der Endmontage zuführbar. Die Lasteinleitung der Seilzugkräfte erfolgt aus der unteren Abspannung in die Fachwerkkonstruktion am Ende des Auslegers ohne Beanspruchung des Auftriebskörpers. Die Herstellung des Systems ist unabhängig von der Wassertiefe kostenneutral für Tiefen bis 1.000 Meter. Es kann eine optimale Anpassung der Systemmassenverteilung über variabel gestaltbare Ballastelemente, vorzugsweise durch Anordnung von zusätzlichen Massen in Form von Stahlbetonfertigteilen im gesamten Bereich der Fachwerkskonstruktion der Ausleger vorgenommen werden. Optional ist eine Anpassung der Gesamtauftriebskraft durch zusätzliche Anordnung variabel gestalteter Auftriebskomponenten, vorzugsweise in Form kugelförmiger Hohlkörper an beliebigen Stellen der Fachwerkskonstruktion der Ausleger möglich. Das Planungsziel ist für eine 3 Megawatt Windenergieanlage darstellbar. Die Entwicklung von Auslegervarianten für Anlagen bis ca. 5 bis 6 Megawatt ist möglich. Die Verankerung des Gründungssystems kann mittels auf dem Meeresboden anzuordnender Verankerungselemente vorzugsweise durch vor Ort hergestellte Schwergewichtsfundamente in Betonbauweise ausgeführt werden.

Das erfindungsgemäße schwimmende Gründungstragwerk für Offshore-Bauwerke weist mehrere Auftriebskörper auf, die außen an einem Stabtragwerk angeordnet sind, das seinerseits über Seile 8, 9, 10 mit Ballastkörpern verbunden ist. Dieses Konzept ergibt eine einfache Bauweise und niedrige Baukosten.

### Bezugszeichen

- 1: Windkraftanlage
- 2: Mast
- 3: Schwimmfundament
- 4: Gründungstragwerk
- 5, 6, 7: Ballastkörper
- 8, 9, 10, 10a, 10b: Seile
- 11, 12, 13: Ausleger
- 14: Raumtragwerk
- 15, 16, 17, 18, 19, 20: Rohrsegmente
- 17a: Kastenprofil
- 17b: Muffe
- 17c, d: Flansche
- 21, 22, 23, 24: Knotenstücke
- 24a: verlorene Schalung
- 25, 26: Rohrsegmente
- 28, 29, 30: Auftriebskörper
- 31: Käfig
- 32, 33, 34: Hohlkastenträger
- 35: Stabwerk
- 35a, b: Konsolen
- 35c: Träger
- 36: Oberseite
- 37: Boden
- 38: unterer Teil des Auftriebskörpers
- 39: oberer Teil des Auftriebskörpers
- 40: Dichtung
- 41: Stutzen
- 42: Anschlusseinrichtung
- 43, 44: Streben
- 45: Stange
- 46: Dichtung
- 47: Kammer
- 48: hydraulische Stelleinrichtung
- 49a, b: Seitenabstützungen
- 50-53: Kastenprofilträger
- 54: Winde
- 55, 56: Seilscheiben
- 57: Welle
- 58, 59: Lagerblöcke
- 60, 61: Hydraulikzylinder
- 62, 63: Dichtungen
- 64: Stütze
- 65, 66: Schottwände
- 67: Drehmomentstütze
- 68: Ballastkörper
- 69: Auftriebskörper

## Patentansprüche

1. Schwimmendes Gründungstragwerk (4) für Offshore-Bauwerke,
mit mindestens einem Auftriebskörper (28, 29, 30), der wenigstens teilweise aus Beton besteht, und
mit einem Tragwerk (11, 12, 13, 14) aus Stahl
wobei das Tragwerk (11, 12, 13, 14) eine Kombination aus Schalentragwerk und Stabtragwerk ist,
**dadurch gekennzeichnet,**
**dass** das Tragwerk (11, 12, 13, 14) mehrere Ausleger (11, 12, 13) aufweist, die jeweils als räumliches Stabtragwerk ausgebildet sind und
von einem mittleren Raumtragwerk (14) radial nach außen weg ragen.

2. Gründungstragwerk nach Anspruch 1, **dadurch gekennzeichnet, dass** das Tragwerk (14) ein Raumfachwerk ist.

3. Gründungstragwerk nach Anspruch 1, **dadurch gekennzeichnet, dass** wenigstens einer der Auftriebskörper (28, 29, 30) als Maschinenraum dient.

4. Gründungstragwerk nach Anspruch 3, **dadurch gekennzeichnet, dass** der Auftriebskörper (28, 29, 30) als Aufnahmeraum für eine Stelleinrichtung dient.

5. Gründungstragwerk nach Anspruch 1, **dadurch gekennzeichnet, dass** die Ausleger (11, 12, 13) an ihren Enden die Auftriebskörper (28, 29, 30) tragen.

6. Gründungstragwerk nach Anspruch 1, **dadurch gekennzeichnet, dass** das Tragwerk (11, 12, 13, 14) Verbindungsknoten (21, 22, 23, 24) enthält, die aus Stahlbeton oder alternativ Stahlrohr gefertigt sind.

7. Gründungstragwerk nach Anspruch 6, **dadurch gekennzeichnet, dass** die Verbindungsknoten (21, 22, 23, 24) als begehbare Hohlkörper ausgebildet sind.

8. Gründungstragwerk nach Anspruch 7, **dadurch gekennzeichnet, dass** wenigstens einer der Verbindungsknoten (21, 22, 23, 24) über einen begehbaren Kanal (25, 26, 27) mit wenigstens einem der Auftriebskörper (28, 29, 30) verbunden ist.

9. Gründungstragwerk nach Anspruch 8, **dadurch gekennzeichnet, dass** der begehbare Kanal (25, 26, 27) jeweils durch ein Rohr gebildet ist.

10. Gründungstragwerk nach Anspruch 9, **dadurch gekennzeichnet, dass** das Rohr aus Stahl, Kunststoff, mit oder ohne Faserverstärkung, einem Stahl-KunststoffVerbund oder Stahlbeton besteht.

11. Gründungstragwerk nach Anspruch 1, **dadurch gekennzeichnet, dass** das Tragwerk (11, 12, 13, 14) wenigstens eine Käfiganordnung (31) aufweist, die wenigstens ein Betonbauteil (21) umgibt.

12. Gründungstragwerk nach Anspruch 11, **dadurch gekennzeichnet, dass** die Käfiganordnung (31) das Betonbauteil (21) entlastet.

13. Gründungstragwerk nach Anspruch 1, **dadurch gekennzeichnet, dass** zu dem Schalentragwerk (14) Elemente aus Beton und/oder Elemente aus Stahl gehören.

14. Gründungstragwerk nach Anspruch 1, **dadurch gekennzeichnet, dass** zu dem Stabtragwerk (11, 12, 13) Elemente aus Stahl gehören.

15. Gründungstragwerk nach Anspruch 1, **dadurch gekennzeichnet, dass** wenigstens einer der Auftriebkörper (28, 29, 30) in Mischbauweise erstellt ist und dazu sowohl mindestens ein Beton- oder Stahlbetonbauteil (38) und wenigstens ein Stahlbauteil (39) aufweist, die gemeinsam einen Hohlraum umschließen.

16. Gründungstragwerk nach Anspruch 1, **dadurch gekennzeichnet, dass** der Auftriebskörper (28, 29, 30) eine Zylinderform aufweist.

17. Gründungstragwerk nach Anspruch 16, **dadurch gekennzeichnet, dass** der Auftriebskörper (28, 29, 30) eine gerundete Deckfläche (36) und/oder einen flachen oder kegelförmigen Boden aufweist.

18. Gründungstragwerk nach Anspruch 1, **dadurch gekennzeichnet, dass** der Auftriebskörper (28, 29, 30) in einem unteren Abschnitt (38) durch eine Betontasse und in einem oberen Abschnitt (39) durch eine Stahlhaube gebildet ist, die mit der Betontasse wasserdicht verbunden ist.

19. Gründungstragwerk nach Anspruch 1, **dadurch gekennzeichnet, dass** das Tragwerk (11, 12, 13, 14) einerseits die von den Auftriebskörpern (28, 29, 30) herrührende Auftriebskraft und andererseits die Abspannkraft von Verankerungen (5, 6, 7) aufnimmt.

20. Gründungstragwerk nach Anspruch 19, **dadurch gekennzeichnet, dass** die Verankerungen (5, 6, 7) durch Beton-Ballastkörper gebildet sind.

## Claims

1. Floating foundation supporting framework (4) for offshore structures,
comprising at least one buoyancy element (28, 29, 30) consisting at least partially of concrete, and
a supporting framework (11, 12, 13, 14) of steel,
wherein the supporting framework (11, 12, 13, 14) is a combination of a shell supporting framework and a bar-type framework, **characterized in that** the
supporting framework (11, 12, 13, 14) comprises several cantilevers (11, 12, 13) that are respectively configured as a spatial bar-type framework; and
that extend radially outward from a central spatial trussed structure (14).

2. Foundation supporting framework according to claim 1, **characterized in that** the supporting framework (14) is a spatial trussed framework.

3. Foundation supporting framework according to claim 1, **characterized in that** at least one of the buoyancy elements (28, 29, 30) is disposed to act as a machine room.

4. Foundation supporting framework according to claim 3, **characterized in that** the buoyancy element (28, 29, 30) is disposed to act as an accommodation space for an adjustment arrangement.

5. Foundation supporting framework according to claim 1, **characterized in that** the supporting framework (11, 12, 13) comprises at least two cantilevers (11, 12, 13), the ends of said cantilevers supporting the buoyancy elements (28, 29, 30).

6. Foundation supporting framework according to claim 1, **characterized in that** the supporting framework (11, 12, 13) contains junction points (21, 22, 23, 24) that are made of reinforced concrete or, alternatively, of steel piping.

7. Foundation supporting framework according to claim 6, **characterized in that** the junction points (21, 22, 23, 24) are configured as walkable hollow bodies.

8. Foundation supporting framework according to claim 7, **characterized in that** at least one of the junction points (21, 22, 23, 24) is connected with at least one of the buoyancy elements (28, 29, 30) via a walkable duct (25, 26, 27).

9. Foundation supporting framework according to claim 8, **characterized in that** the walkable duct (25, 26, 27) is configured as a pipe.

10. Foundation supporting framework according to claim 9, **characterized in that** the pipe consists of steel, plastic material with or without fiber reinforcement, a steel-plastic composite or reinforced concrete.

11. Foundation supporting framework according to claim 1, **characterized in that** the supporting framework (11, 12, 13, 14) comprises at least one cage arrangement (31) that circumscribes at least one concrete component (21).

12. Foundation supporting framework according to claim 11, **characterized in that** the cage arrangement (31) disburdens the concrete component (21).

13. Foundation supporting framework according to claim 1, **characterized in that** the shell supporting framework (14) comprises elements of concrete and/or elements of steel.

14. Foundation supporting framework according to claim 1, **characterized in that** the bar-type supporting framework (11, 12, 13) comprises elements of steel.

15. Foundation supporting framework according to claim 1, **characterized in that** at least one of the buoyancy elements (28, 29, 30) is designed in mixed construction and, in doing so, comprises at least one concrete or reinforced concrete component (38) and at least one steel component (39), said components, together, enclosing a hollow space.

16. Foundation supporting framework according to claim 1, **characterized in that** the buoyancy element (28, 29, 30) has a cylindrical form.

17. Foundation supporting framework according to Claim 16, **characterized in that** the buoyancy element (28, 29, 30) has a rounded cover surface (36) and/or a flat or conical bottom.

18. Foundation supporting framework according to claim 1, **characterized in that** a lower section (38) of the buoyancy element (28, 29, 30) is made of a concrete cup and that an upper section (39) of said buoyancy element is made of a steel hood, said steel hood being fitted to the concrete cup in a water-tight manner.

19. Foundation supporting framework according to claim 1, **characterized in that** the supporting framework (11, 12, 13, 14) absorbs, on the one hand, the buoyancy force due to the buoyancy elements (28, 29, 30) and, on the other hand, the transfer force of the anchorages (5, 6, 7).

20. Foundation supporting framework according to Claim 19, **characterized in that** the anchorages (5, 6, 7) are made of concrete ballast elements.

## Revendications

1. Structure de fondation flottante (4) pour ouvrages implantés au large, comprenant
au moins un corps flottant (28, 29, 30) consistant au moins partiellement en du béton, et une ossature de support (11, 12, 13, 14) en acier,
ladite ossature de support (11, 12, 13, 14) étant une combinaison d'une ossature porteuse à coques et d'une ossature porteuse à poutres,
**caractérisée par le fait**
**que** l'ossature de support (11, 12, 13, 14) comporte plusieurs zones saillantes (11, 12, 13) qui sont respectivement réalisées sous la forme d'une ossature porteuse tridimensionnelle à poutres, et
dépassent vers l'extérieur, dans le sens radial, au-delà d'une ossature porteuse centrale tridimensionnelle (14).

2. Structure de fondation selon la revendication 1, **caractérisée par le fait que** l'ossature porteuse (14) est un treillis tridimensionnel.

3. Structure de fondation selon la revendication 1, **caractérisée par le fait qu'**au moins l'un des corps flottants (28, 29, 30) remplit la fonction d'un compartiment machine.

4. Structure de fondation selon la revendication 3, **caractérisée par le fait que** le corps flottant (28, 29, 30) remplit la fonction d'un espace de réception dévolu à un dispositif de réglage.

5. Structure de fondation selon la revendication 1, **caractérisée par le fait que** les zones saillantes (11, 12, 13) portent les corps flottants (28, 29, 30) à leurs extrémités.

6. Structure de fondation selon la revendication 1, **caractérisée par le fait que** l'ossature de support (11, 12, 13, 14) renferme des noeuds de solidarisation (21, 22, 23, 24) constitués de béton armé ou, en variante, d'une tubulure d'acier.

7. Structure de fondation selon la revendication 6, **caractérisée par le fait que** les noeuds de solidarisation (21, 22, 23, 24) sont réalisés sous la forme de corps creux praticables.

8. Structure de fondation selon la revendication 7, **caractérisée par le fait qu'**au moins l'un des noeuds de solidarisation (21, 22, 23, 24) est relié à au moins l'un des corps flottants (28, 29, 30) par l'intermédiaire d'un canal praticable (25, 26, 27).

9. Structure de fondation selon la revendication 8, **caractérisée par le fait que** le canal praticable (25, 26, 27) est respectivement formé d'une tubulure.

10. Structure de fondation selon la revendication 9, **caractérisée par le fait que** la tubulure consiste en de l'acier, en une matière plastique pourvue ou dépourvue de renfort fibreux, en un composite acier-matière plastique, ou en du béton armé.

11. Structure de fondation selon la revendication 1, **caractérisée par le fait que** l'ossature de support (11, 12, 13, 14) présente au moins un ensemble (31) en forme de cage, qui entoure au moins un élément structurel (21) en béton.

12. Structure de fondation selon la revendication 11, **caractérisée par le fait que** l'ensemble (31) en forme de cage soulage l'élément structurel (21) en béton.

13. Structure de fondation selon la revendication 1, **caractérisée par le fait que** des éléments en béton, et/ou des éléments en acier, font partie intégrante de l'ossature porteuse (14) à coques.

14. Structure de fondation selon la revendication 1, **caractérisée par le fait que** des éléments en acier font partie intégrante de l'ossature porteuse (11, 12, 13) à poutres.

15. Structure de fondation selon la revendication 1, **caractérisée par le fait qu'**au moins l'un des corps flottants (28, 29, 30) est d'un type de réalisation mixte et inclut, à cet effet, à la fois au moins un élément structurel (38) en béton ou en béton armé et au moins un élément structurel (39) en acier, qui ceinturent associativement une cavité.

16. Structure de fondation selon la revendication 1, **caractérisée par le fait que** le corps flottant (28, 29, 30) revêt une forme cylindrique.

17. Structure de fondation selon la revendication 16, **caractérisée par le fait que** le corps flottant (28, 29, 30) comporte une surface de recouvrement arrondie (36), et/ou un fond aplati ou tronconique.

18. Structure de fondation selon la revendication 1, **caractérisée par le fait que** le corps flottant (28, 29, 30) est formé d'une masse de béton dans une région inférieure (38) et, dans une région supérieure (39), d'une coiffe d'acier reliée à ladite masse de béton avec étanchéité à l'eau.

19. Structure de fondation selon la revendication 1, **caractérisée par le fait que** l'ossature de support (11, 12, 13, 14) absorbe, d'une part, la force portante émanant des corps flottants (28, 29, 30) et, d'autre part, la force de tension d'éléments d'ancrage (5, 6, 7).

20. Structure de fondation selon la revendication 19, **caractérisée par le fait que** les éléments d'ancrage (5, 6, 7) sont formés par des corps de lestage en béton.
